# EUROPEAN PATENT APPLICATION

(11) **EP 4 730 402 A1**
(43) Date of publication of application: **22.04.2026**
(21) Application number: 24849686.1
(22) Date of filing: 31.07.2024
(51) Int. Cl.: H01M 4/04, H01M 4/66, H01M 10/04, B30B 3/04

(54) **ELECTRODE MANUFACTURING DEVICE AND ELECTRODE MANUFACTURING METHOD**

(30) Priority: 01.08.2023 KR 20230100405
(71) Applicant: LG Energy Solution, Ltd., Seoul 07335 (KR)
(72) Inventor: MOON, Jae Won, Daejeon 34122 (KR); PAENG, Ki Hoon, Daejeon 34122 (KR)
(74) Representative: Hoffmann Eitle
(86) International application number: PCT/KR2024/095944
(87) International publication number: WO 2025/029119

(57) **Abstract**

The present invention relates to an electrode preparation apparatus including a roll-to-roll process, which includes an unwinding unit in which an electrode current collector and a process film are sequentially wound around an outer circumferential surface of a feeding roller, the unwinding unit configured to continuously supply the electrode current collector; and an active material forming unit configured to form an active material layer on a surface of the electrode current collector, wherein the electrode current collector includes a polymer resin layer and metal layers disposed on both sides of the polymer resin layer, and the process film is formed of a material identical to the polymer resin layer of the electrode current collector.

## Description

### TECHNICAL FIELD

The present invention relates to an electrode preparation apparatus and a method of preparing an electrode, and more particularly, to an electrode preparation apparatus and a method of preparing an electrode which may minimize deformation of an electrode current collector including a polymer resin layer.

### BACKGROUND ART

Demand for batteries as an energy source has been significantly increased as technology development and demand with respect to electric vehicles and energy storage systems (ESS) have increased, and accordingly, research is being conducted on batteries that may meet various needs. Particularly, research is being actively conducted on lithium secondary batteries having excellent life and cycle characteristics as well as high energy density as power sources for these devices.

However, in the lithium secondary battery, a phenomenon may occur in which temperature of an electrode is rapidly increased due to thermal and physical factors. The thermal factors include overcharging or overload due to misuse or malfunction of a charger, and, as the physical factors, the phenomenon of the rapid increase in the temperature of the electrode may occur when an internal short circuit occurs due to a contact between negative electrode and positive electrode materials which is caused by damage of a separator due to external impact. If the temperature of the electrode is rapidly increased in this way, the battery becomes very unstable due to a reaction between an electrolyte and lithium or generation of hydrogen and oxygen in the battery, a solvent of the electrolyte is decomposed to generate gas, and the decomposition gas of the solvent may ignite and lead to an explosion of the battery.

A conventional lithium secondary battery includes only a single metal layer as an electrode current collector, wherein, specifically, an aluminum single metal layer has been used as a positive electrode collector, and a copper single metal layer has been used as a negative electrode collector. However, since these single metal layers have very high electrical conductivity and thermal conductivity, time to reach a high temperature instantaneously due to an abnormal behavior of the battery is very short and there is a concern about thermal propagation due to thermal runaway.

Thus, since a weight reduction in comparison to an electrode current collector formed of metal is possible by using an electrode current collector (metallized film) including a polymer resin layer that is disposed between two metal layers, instead of the conventional electrode current collector, energy density per weight may be significantly improved and safety may be improved by causing a short circuit between electrodes in case of fire.

An electrode preparation process using a roll-to-roll process accounts for approximately 18% of a battery preparation process, is an important process in which most variables in battery design are determined, and is a process with high difficulty which may be affected by various variables such as roll temperature control, peripheral speed ratio control between each roll, removal of foreign matter, and feeding speed control of the entire roll-to-roll process.

In the electrode preparation process by this roll-to-roll process, in a case in which the electrode current collector having the polymer resin layer disposed between the two metal layers is used, since the polymer resin layer and the metal layer have different characteristics such as different glass transition temperatures and different tensile strengths, wrinkles occur during roll winding due to shrinkage or elongation of the polymer resin layer when preparing the electrode by the roll-to-roll process, and thus, it has a serious impact on electrode quality.

Also, in order to find appropriate process conditions to improve the occurrence of the wrinkles, an electrode current collector film, which has been fed while finding the conditions, must be discarded, wherein the multilayer-structured film has limitations in disposal and recycling, and there is also a problem of reducing unit price competitiveness due to material exhaustion.

Accordingly, there is a need for an electrode preparation technique that utilizes an electrode current collector, a metallized film with improved safety which may ensure process continuity while achieving a zero level of the discarded electrode current collector as well as maintaining excellent electrode quality.

### DISCLOSURE OF THE INVENTION

### TECHNICAL PROBLEM

An aspect of the present invention provides an electrode preparation apparatus and a method of preparing an electrode which may prepare an electrode by utilizing an electrode current collector, a metallized film including a polymer resin layer, and may improve quality by reducing an amount of the electrode current collector discarded due to occurrence of wrinkles in a roll-to-roll process to zero.

### TECHNICAL SOLUTION

[1] According to an embodiment, provided is an electrode preparation apparatus including a roll-to-roll process, wherein the electrode preparation apparatus includes an unwinding unit in which an electrode current collector and a process film are sequentially wound around an outer circumferential surface of a feeding roller, the unwinding unit configured to continuously supply the electrode current collector; and an active material forming unit configured to form an active material layer on a surface of the electrode current collector, wherein the electrode current collector includes a polymer resin layer and metal layers disposed on both sides of the polymer resin layer, and the process film is formed of a material identical to the polymer resin layer of the electrode current collector.
[2] The electrode preparation apparatus of [1] above, wherein a length ratio of the electrode current collector to the process film may be in a range of 1.5:1 to 3.5:1.
[3] The electrode preparation apparatus of [1] and/or [2] above, wherein the process film may be longer than a total line length of the roll-to-roll process.
[4] The electrode preparation apparatus of at least one of [1] to [3] above, wherein the polymer resin layer may include at least one selected from the group consisting of a polyester-based resin, an epoxy-based resin, a phenol-based resin, a melamine-based resin, a urethane-based resin, a silicone-based resin, a vinyl acetate-based resin, a rubber-based resin, an acrylic-based resin, and a polyetherurethane-based resin.
[5] The electrode preparation apparatus of at least one of [1] to [4] above, wherein the metal layers may include at least one selected from the group consisting of copper, stainless steel, aluminum, nickel, titanium, heat-treated carbon, and an aluminum-cadmium alloy.
[6] The electrode preparation apparatus of at least one of [1] to [5] above, wherein the process film has a surface coated with low-grade alcohol, or has a surface treated with room-temperature plasma.
[7] The electrode preparation apparatus of at least one of [1] to [6] above, wherein the electrode preparation apparatus may further include a winding unit configured to wind the electrode current collector, on which the active material layer is disposed, in a form of a roll.
[8] The electrode preparation apparatus of at least one of [1] to [7] above, wherein the active material forming unit may include an active material applying unit that applies an active material slurry onto the surface of the electrode current collector; and a drying unit that dries an active material applied onto the electrode current collector.
[9] The electrode preparation apparatus of at least one of [1] to [8] above, wherein the active material forming unit may include a powderization unit that prepares powder containing an active material; and a calendaring unit that rolls the powder to prepare a free-standing film.
[10] The electrode preparation apparatus of at least one of [1] to [9] above, wherein the metal layers disposed on the both sides of the polymer resin layer may each independently have a thickness ratio with respect to the polymer resin layer of 1:1 to 1:15.
[11] The electrode preparation apparatus of at least one of [1] to [10] above, wherein the polymer resin layer and the process film may each have a thickness of 3 µm to 20 µm.
[12] The electrode preparation apparatus of at least one of [1] to [11] above, wherein the metal layers disposed on the both sides of the polymer resin layer may each independently have a thickness of 0.2 µm to 5 µm.
[13] According to another embodiment, provided is a method of preparing an electrode which includes a roll-to-roll process, the method including: a step S1 of guiding a process film prior to an electrode current collector from an unwinding unit in which the electrode current collector and the process film are sequentially wound on an outer circumferential surface of a roller; a step S2 of collecting a degree of deformation of the process film as data by using process conditions including temperature as variables during the guiding of the process film; a step S3 of extracting process conditions, under which the process film is not deformed, from the collected data; and a step S4 of disposing an active material layer on the electrode current collector while a film of the electrode current collector is guided under the process conditions extracted in the step S3.
[14] The method of [13] above, wherein, in the step S1, the process film may be guided to be longer than a total line length of the roll-to-roll process.

### ADVANTAGEOUS EFFECTS

An electrode preparation apparatus according to an embodiment may prepare an electrode by utilizing an electrode current collector, a metallized film including a polymer resin layer, and may improve electrode quality by reducing an amount of the electrode current collector discarded due to occurrence of wrinkles in a roll-to-roll process to zero.

Also, a method of preparing an electrode according to another embodiment may pre-adjust process conditions under which the wrinkles do not occur in the electrode current collector, the metallized film including the polymer resin layer, and accordingly, has an advantage in that the electrode current collector does not need to be consumed for electrode preparation.

Furthermore, since a treatment providing various functions to the polymer resin layer may be performed in a section where the polymer resin layer moves alone, an effect of improving quality may be obtained by removing foreign matter on a surface of a guide roll before a main process.

### BRIEF DESCRIPTION OF THE DRAWINGS

FIG. 1 is a schematic view illustrating an electrode preparation apparatus according to an embodiment.
FIG. 2 illustrates an unwinding unit of the electrode preparation apparatus according to the embodiment.
FIG. 3 is a schematic view for explaining the electrode preparation apparatus including a wet process according to the embodiment.
FIG. 4 is a schematic view for explaining the electrode preparation apparatus including a dry process according to the embodiment.

### MODE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout.

Unless defined otherwise, all terms (including technical and scientific terms) used herein may be intended to have meanings understood by those skilled in the art. In addition, terms defined in general dictionaries should not be interpreted abnormally or exaggeratedly, unless clearly specifically defined.

The terminology used herein is for the purpose of describing particular example embodiments only and is not intended to be limiting of the present invention. In the specification, the terms of a singular form may include plural forms unless referred to the contrary. It will be further understood that the terms "comprises" and/or "comprising" when used in this specification, specify the presence of stated components, but do not preclude the presence or addition of one or more other components.

In this specification, when it is said that a part includes a certain component, it means that other components may be further included rather than excluding other components unless specifically stated to the contrary.

The description of "A and/or B" in this specification means A, or B, or A and B.

In this specification, the expression "%" denotes wt% unless explicitly stated otherwise.

An electrode preparation apparatus and a method of preparing an electrode, which are described in this specification, include at least one of technical configurations described below, and may include any combination of technically feasible configurations among the following technical configurations.

### Electrode Preparation Apparatus

Hereinafter, an electrode preparation apparatus according to each embodiment will be described in detail with reference to the drawings. In adding reference numerals to components of each drawing, it should be noted that the same reference numerals may be assigned to the same components as much as possible even though they are shown in different drawings. In addition, in describing the present invention, when it is determined that a detailed description of a related known configuration or function may obscure the gist of the present invention, the detailed description thereof will be omitted.

The electrode preparation apparatus according to the embodiment includes a roll-to-roll process, wherein the electrode preparation apparatus includes an unwinding unit in which an electrode current collector and a process film are sequentially wound around an outer circumferential surface of a feeding roller, the unwinding unit configured to continuously supply the electrode current collector; and an active material forming unit configured to form an active material layer on a surface of the electrode current collector.

Also, the electrode current collector includes a polymer resin layer and metal layers disposed on both sides of the polymer resin layer, and the process film is formed of the same material as the polymer resin layer of the electrode current collector.

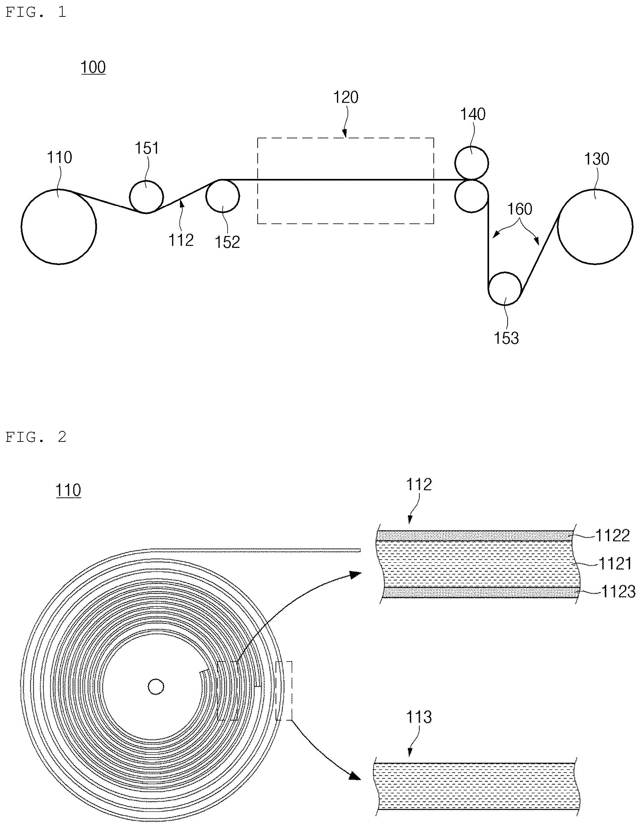

FIG. 1 is a schematic view illustrating an example of the electrode preparation apparatus 100, wherein the electrode preparation apparatus 100 will be described with reference to this.

The electrode preparation apparatus 100 sequentially discharges and guides a process film and an electrode current collector 112 from an unwinding unit 110 in which the electrode current collector and the process film are sequentially wound, and the guided electrode current collector 112 passes through an active material forming unit 120, which forms an active material layer on the current collector, to prepare an electrode 160. In this case, the electrode current collector 112 may pass through guide rollers 151 and 152 while moving to the active material forming unit 120, the number of the guide rollers may be appropriately adjusted according to need of a process, the electrode may be rolled by a rolling roller 140 after passing through the active material forming unit 120, and a guide roller 153 may also be provided at a rear end thereof.

The electrode preparation apparatus 100 may further include a winding unit 130 for winding the electrode 160, which is the electrode current collector 112 on which the active material layer is disposed, in a form of a roll, but the electrode 160 may not be wound by a roll like the winding unit 130, but may be cut while being moved by a moving means such as a conveyor belt, and may be recovered in various ways in association with a shape of an electrode assembly or a subsequent battery assembly process.

### Electrode Current Collector

According to an embodiment, the electrode current collector 112 includes a polymer resin layer 1121 and metal layers 1122 and 1123 disposed on both sides of the polymer resin layer.

A conventional lithium secondary battery includes only a single metal layer as an electrode current collector, wherein, specifically, an aluminum single metal layer has been used as a positive electrode collector, and a copper single metal layer has been used as a negative electrode collector. However, since these single metal layers have very high electrical conductivity and thermal conductivity, time to reach a high temperature instantaneously due to an abnormal behavior of the battery is very short and there is a concern about thermal propagation due to thermal runaway.

Thus, since a weight reduction in comparison to an electrode current collector formed of metal is possible by using the electrode current collector including a polymer resin layer disposed between two metal layers, instead of the conventional electrode current collector, energy density per weight may be significantly improved and safety may be improved by causing a short circuit between electrodes in case of fire.

According to an embodiment, the polymer resin layer 1121 is a matrix resin, wherein it prevents abnormal heat transfer between the electrode current collector and an electrode material mixture layer, and may also play a role in reducing a weight of the electrode current collector and mitigating external impact.

The polymer resin layer, for example, may include at least one selected from the group consisting of a polyester-based resin, an epoxy-based resin, a phenol-based resin, a melamine-based resin, a urethane-based resin, a silicone-based resin, a vinyl acetate-based resin, a rubber-based resin, an acrylic-based resin, and a polyetherurethane-based resin.

For example, the polymer resin layer may include at least one selected from the group consisting of polyimide (PI), polyethylene terephthalate (PET), polybuthylene terephthalate (PBT), polyethylene naphthalate (PEN), polyacrylonitrile (PAN), polyethylene (PE), polyamide (PA), and polypropylene (PP). Also, the polymer resin layer may be a thermosetting resin or a photocurable resin, and may preferably include an ultraviolet-curable resin.

The polymer resin layer may contain a photoinitiator such as a benzoin compound, an acetophenone compound, an acylphosphine oxide compound, a titanocene compound, a thioxanthone compound, or a peroxide compound, or a photoinitiator such as an amine or a quinone, and may additionally contain a curing accelerator such as amine-based, imidazole-based, phosphorus-based, boron-based, and phosphorus-boron-based curing accelerators. Furthermore, the polymer resin layer may contain a thermal initiator such as a peroxide such as azobisnitrile, benzoyl peroxide, or acetyl peroxide.

The polymer resin layer may have a thickness of 3 µm to 20 µm, may have a thickness of 4 µm or more, 5 µm or more, or 6 µm or more, and may also have a thickness of 15 µm or less, 13 µm or less, 10 µm or less, or 8 µm or less. In a case in which the thickness of the polymer resin layer satisfies a range of 3 µm to 20 µm, it may be a thickness optimized for heat transfer and may be at a level that does not affect the energy density, and accordingly, the polymer resin layer has an advantage of improving the energy density while having an effect of reducing the weight of the electrode current collector and mitigating the external impact.

The metal layers 1122 and 1123 may include at least one selected from the group consisting of copper, stainless steel, aluminum, nickel, titanium, heat-treated carbon, and an aluminum-cadmium alloy. Although not particularly limited, when forming a positive electrode collector, it is preferable to include aluminum, and, when forming a negative electrode collector, it is preferable to include copper. Also, microscopic irregularities may be formed on surfaces of the metal layers 1122 and 1123 to strengthen a bonding force with the electrode active material layer, and the metal layers 1122 and 1123 may be used in various shapes such as that of a film, a sheet, a foil, a net, a porous body, a foam body, a non-woven fabric body, and the like.

The metal layers 1122 and 1123 may have a thickness of 0.2 µm to 5.0 µm, may preferably have a thickness of 0.3 µm or more, 0.5 µm or more, or 0.6 µm or more, and may also have a thickness of 3.0 µm or less, 2.0 µm or less, 1.5 µm or less, or 1.0 µm or less. In a case in which the thickness of the metal layer satisfies the above range, the metal layer may perform its function as a support without any problem, and the thickness may be a thickness that is easy to control physical properties, and may be an optimal thickness when considering resistance or energy density.

A thickness ratio of the metal layer to the polymer resin layer may be in a range of 1:1 to 1:15, wherein the thickness ratio may be a ratio of either one of the two metal layers, and the thicknesses of the two metal layers may be used independently of each other. The thickness ratio may be in a range of 1:1 to 1:15, preferably 1:4 to 1:12, and more preferably 1:6 to 1:10. In a case in which the thickness ratio of the first metal layer or second metal layer to the polymer resin layer satisfies the above numerical range, there is an effect of improving safety while energy density of a cell increases.

### Unwinding Unit

The electrode preparation apparatus 100 according to the embodiment includes the unwinding unit 110 in which the electrode current collector 112 and a process film 113 are sequentially wound around an outer circumferential surface of a feeding roller 111, the unwinding unit 110 configured to continuously supply the electrode current collector 112.

FIG. 2 illustrates the unwinding unit, wherein the electrode current collector 112 is positioned on an inner side portion of the unwinding unit 110 by being wound around the outer circumferential surface of the feeding roller 111, and the process film 113 is positioned on an outer side portion by being wound around an outer circumferential surface of the electrode current collector 110.

Since the unwinding unit 110 is configured by winding the electrode current collector 112 and the process film 113 together around the feeding roller 111, the process film 113 wound at a rear end may be fed first while setting process conditions, and accordingly, a problem of wrinkles occurring during roll winding or a problem of wrinkles occurring in the middle of the process may be prevented when feeding the electrode current collector 112 to prevent consumption/disposal of the electrode current collector. Also, in comparison to a case where the process film 113 is wound on a separate roller to perform a feeding test, since process inefficiencies, such as stopping the process and replacing the roller with a new roller, may be eliminated, a significant advantage in the process may be obtained.

In the electrode preparation apparatus 100, the process film 113 wound on the outer side portion of the unwinding unit 110 is formed of the same material as the polymer resin layer 1121 of the electrode current collector 112 that is wound on the inner side portion.

In configuring the unwinding unit 110, the unwinding unit 110 may be easily prepared by forming the metal layers 1122 and 1123 only on a portion of the polymer resin layer 1121, and in extracting optimal conditions by using the process conditions as variables, accuracy of the process and electrode quality may be secured by using the same material as the polymer resin layer of the actual electrode current collector.

A length ratio of the electrode current collector to the process film may be in a range of 1.5:1 to 3.5:1. A length of the electrode current collector used may be about 1.5 times to 3.5 times, preferably, 1.6 times or more, 1.7 times or more, 1.8 times or more, or 2.0 times or more, and 3.4 times or less, 3.3 times or less, 3.2 times or less, 3.1 times or less, or 3.0 times or less longer than a length of the process film. Accordingly, process conditions capable of improving the electrode quality may be extracted as accurately as possible. The above range takes into account a length of the process film consumed and a length of the process film that needs to be fed when extracting the process conditions.

The process film may be at least longer than a total line length of the roll-to-roll process used. It may be possible to extract the process conditions without running the entire process, but for the extraction of more accurate process conditions, it may be necessary to feed the process film with a length corresponding to at least the entire process length.

The process film may have a surface coated with low-grade alcohol, or may have a surface treated with room-temperature plasma. The process film may be used to extract the process conditions to minimize defects before using the electrode current collector, a metallized film, in the actual electrode preparation apparatus, but the process film is not limited to this function, but may remove foreign matter existing on various rollers in the roll-to-roll process through the coating with low-grade alcohol or room-temperature plasma treatment, and may be used for various functions.

### Active Material Forming Unit

According to an embodiment, the electrode preparation apparatuses 200 and 300 include a roll-to-roll process, wherein they respectively include active material forming units 220 and 320 which form an active material layer on the surface of the electrode current collector 112.

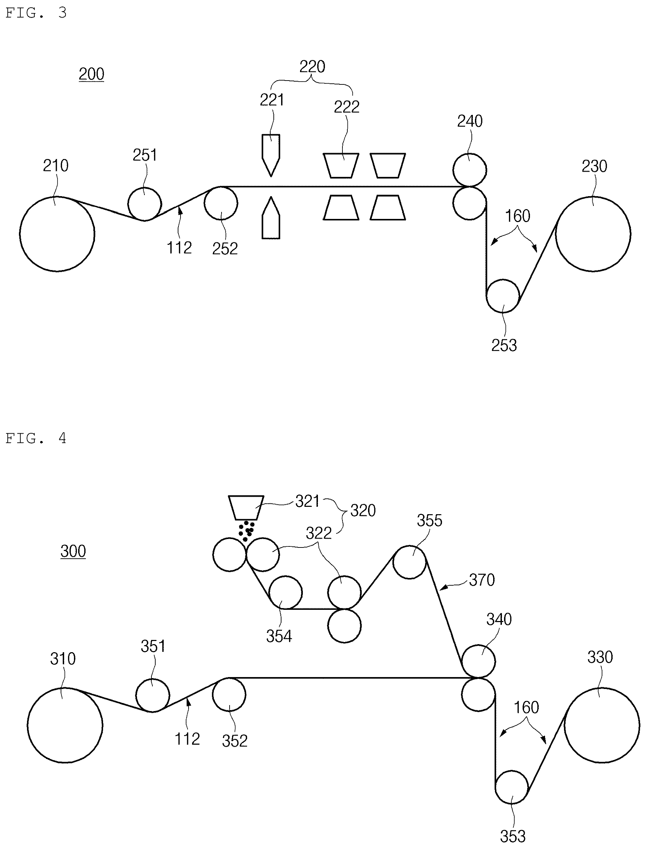

The electrode preparation apparatus 200, as shown in FIG. 3, may use a wet method in which the active material forming unit 220 includes an active material applying unit 221 that applies a slurry containing an active material onto the surface of the electrode current collector; and a drying unit 222 that dries the active material applied onto the electrode current collector.

In the active material forming unit 220, a process may be performed in which a slurry containing the electrode active material, a conductive agent, and a binder is applied onto the electrode current collector 112 by the active material applying unit 221, and the electrode current collector after the application of the active material layer may be prepared into an electrode by the drying unit 222. The active material applying unit 221 may form the active material layer on only one side of the electrode current collector 112 or may form the active material layer on both sides of thereof. The electrode preparation apparatus according to FIG. 3 uses the wet method, wherein additional guide rollers may be disposed and used in addition to guide rollers 251, 252, and 253 illustrated in FIG. 3 in the process of applying and drying the slurry, if necessary.

A conventional method used in the art may be used as a method of applying or drying the slurry containing the electrode active material, but the present invention is not limited thereto.

Also, the electrode preparation apparatus 300, as shown in FIG. 4, may use a dry method in which the active material forming unit 320 includes a powderization unit 321 that prepares powder containing the active material; and a calendaring unit 322 that rolls the powder to prepare a free-standing film 370.

The dry method is a process that does not include a solvent, wherein, after mixing the electrode active material, the conductive agent, and the binder and applying a shear force to form an aggregate, the aggregate may be ground and then subjected to calendering to prepare the free-standing film 370, and, in this case, the film may be bonded to the electrode current collector 112 by a laminating method, and, since the dry method may be performed by a roll-to-roll process from a pre-sheeting process of the ground aggregate powder to the calendering process, the appropriate number of guide rollers 354 and 355 may be disposed at appropriate locations.

### Method of Preparing Electrode

According to another embodiment, a method of preparing an electrode is provided, wherein the method of preparing an electrode may be an electrode preparation method using the above-described electrode preparation apparatus.

The method of preparing an electrode is characterized in that it includes: a step S1 of guiding a process film prior to an electrode current collector from an unwinding unit in which the electrode current collector and the process film are sequentially wound on an outer circumferential surface of a roller; a step S2 of collecting a degree of deformation of the process film as data by using process conditions including temperature as variables during the guiding of the process film; a step S3 of extracting process conditions, under which the process film is not deformed, from the collected data; and a step S4 of disposing an active material layer on the electrode current collector while a film of the electrode current collector is guided under the process conditions extracted in the step S3.

In the step S2, all possible conditions, under which the polymer resin layer of the electrode current collector may be affected by heat, may be considered, and specifically, heat treatment chamber conditions during drying of the electrode or temperature conditions of a heating roll may be considered.

In a case in which the above preparation method is used, since optimal process conditions may be extracted by using the process film in advance, a defect occurrence rate may be significantly reduced, and, in order to extract more optimal process conditions, the process film may be controlled such that it is guided to be at least longer than a total line length of the roll-to-roll process in the step S1.

In the above preparation method, since descriptions of the electrode current collector and the process film and description of a method of disposing the active material layer on the electrode current collector are the same as the descriptions of the electrode preparation apparatus described above, the descriptions thereof are omitted.

### Lithium Secondary Battery

A lithium secondary battery may include an electrode assembly impregnated with an electrolyte in a pouch type, cylindrical type, or prismatic type battery case. The electrode assembly includes an electrode, and may include the electrode prepared by the electrode preparation apparatus according to the embodiment of the present invention.

A positive electrode, a separator, and a negative electrode are sequentially stacked in the electrode assembly, wherein the separator is disposed between the positive electrode and the negative electrode, the positive electrode includes a positive electrode collector and a positive electrode active material layer stacked on the positive electrode collector, the negative electrode includes a negative electrode collector and a negative electrode active material layer stacked on the negative electrode collector, and at least one of the positive electrode and the negative electrode may be prepared by the above-described electrode preparation apparatus of the present invention.

### Positive Electrode

A metal layer of the positive electrode collector may include a metal having high conductivity, and is not particularly limited as long as it has no reactivity in a voltage range of the battery and the positive electrode active material layer is easily adhered thereto. As the positive electrode collector, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve adhesion of the positive electrode active material. The positive electrode collector, for example, may be used in various shapes such as that of a film, a sheet, a foil, a net, a porous body, a foam body, a non-woven fabric body, and the like.

The positive electrode active material layer may optionally include a conductive agent and a binder in addition to the positive electrode active material, if necessary.

In this case, the positive electrode active material may be included in an amount of 80 wt% to 99 wt%, more specifically, 90 wt% to 98 wt% based on a total weight of the positive electrode active material layer.

The conductive agent is used to provide conductivity to the electrode, wherein any conductive agent may be used without particular limitation as long as it has suitable electron conductivity without causing chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.01 wt% to 10 wt%, preferably 0.1 wt% to 9 wt%, and more preferably 0.1 wt% to 5 wt% based on the total weight of the positive electrode active material layer.

The binder improves adhesion between positive electrode active material particles and adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with lithium (Li), sodium (Na), or calcium (Ca), or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of the positive electrode active material layer.

The positive electrode may be prepared according to a typical method of preparing a positive electrode except that the above-described positive electrode active material is used. Specifically, a positive electrode slurry composition, which is prepared by dissolving or dispersing the positive electrode active material as well as optionally the binder, the conductive agent, and a dispersant in a solvent, is applied to the positive electrode collector, and the positive electrode may then be prepared by drying and rolling the coated positive electrode collector.

The solvent may be a solvent normally used in the art, and may include dimethyl sulfoxide (DMSO), isopropyl alcohol, N-methylpyrrolidone (NMP), dimethyl formamide (DMF), acetone, or water, and any one thereof or a mixture of two or more thereof may be used. An amount of the solvent used may be sufficient if the solvent may dissolve or disperse the positive electrode active material, the conductive agent, the binder, and the dispersant in consideration of a coating thickness of the slurry and manufacturing yield, and may allow to have a viscosity that may provide excellent thickness uniformity during the subsequent coating for the preparation of the positive electrode.

Also, as another method, the positive electrode may be prepared by casting the positive electrode slurry composition on a separate support and then laminating a film separated from the support on the positive electrode collector.

### Separator

The separator separates the negative electrode and the positive electrode and provides a movement path of lithium ions, wherein any separator may be used as the separator without particular limitation as long as it is typically used in a lithium secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

### Electrolyte

The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

The electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond, an aromatic ring or ether bond); amides such as dimethylformamide; dioxolanes such as 1,3-dioxolane; or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable.

The lithium salt may be used without particular limitation as long as it is a compound capable of providing lithium ions used in the lithium secondary battery. Specifically, an anion of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, or LiB(C₂O₄)₂ may be used as the lithium salt. The lithium salt may be used in a concentration range of 0.1 M to 4.0 M, preferably 0.5 M to 3.0 M, and more preferably 1.0 M to 2.0 M. If the concentration of the lithium salt is included within the above range, since the electrolyte may have appropriate conductivity and viscosity, excellent performance of the electrolyte may be obtained and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 10.0 wt% based on a total weight of the electrolyte.

### Negative Electrode

The negative electrode includes a negative electrode collector and a negative electrode active material layer disposed on the negative electrode collector.

A metal layer of the negative electrode collector is not particularly limited as long as it has high conductivity without causing chemical changes in the battery, and, for example, copper, stainless steel, aluminum, nickel, titanium, fired carbon, copper or stainless steel that is surface-treated with one of carbon, nickel, titanium, silver, or the like, and an aluminum-cadmium alloy may be used. Also, the negative electrode collector may typically have a thickness of 3 µm to 500 µm, and, similar to the positive electrode collector, microscopic irregularities may be formed on the surface of the collector to improve adhesion of a negative electrode active material. The negative electrode collector, for example, may be used in various shapes such as that of a film, a sheet, a foil, a net, a porous body, a foam body, a non-woven fabric body, and the like.

The negative electrode active material layer may optionally include a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy; a metal oxide which may be doped and undoped with lithium such as SiO_{β}(0<β<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

The negative electrode active material may be included in an amount of 80 wt% to 99 wt%, 82 wt% to 99 wt%, or 84 wt% to 99 wt% based on a total weight of the negative electrode active material layer.

The binder is a component that assists in binding between the conductive agent, the active material, and the current collector, wherein the binder is typically added in an amount of 0.1 wt% to 10 wt% based on the total weight of the negative electrode active material layer. Examples of the binder may be polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber, a nitrile-butadiene rubber, a fluorine rubber, and various copolymers thereof.

The conductive agent is a component for further improving conductivity of the negative electrode active material, wherein the conductive agent may be included in an amount of 1 wt% to 30 wt%, 1 wt% to 20 wt%, or 1 wt% to 10 wt% based on the total weight of the negative electrode active material layer. The conductive agent is not particularly limited as long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder and nickel powder; conductive whiskers such as zinc oxide whiskers and potassium titanate whiskers; conductive metal oxide such as titanium oxide; or polyphenylene derivatives, may be used.

The negative electrode active material layer may be prepared by coating a negative electrode slurry composition, which is prepared by dissolving or dispersing optionally the binder and the conductive agent as well as the negative electrode active material in a solvent, on the negative electrode collector and drying the coated negative electrode collector, or may be prepared by casting the negative electrode slurry composition on a separate support and then laminating a film separated from the support on the negative electrode collector.

Also, the lithium secondary battery may further optionally include a battery container accommodating an electrode assembly of the positive electrode, the separator, and the negative electrode, and a sealing member sealing the battery container.

Furthermore, since the lithium secondary battery stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle, and a plug-in hybrid electric vehicle (PHEV); or a power storage system.

### Examples

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Example 1

Aluminum metal was deposited to a thickness of 1 µm on both sides of polyethylene terephthalate (PET) having a thickness of 4 µm to form a metal layer and a metal layer and this was used as an electrode current collector, wherein the electrode current collector in which the metal layers were formed was wound in a length of 1,000 m around a feeding roller and a process film, in which a PET film on which the metal layer was not formed was extended, was wound in a length of 500 m around the feeding roller to form a unwinding unit.

A positive electrode active material (NCM65 1520), a conductive agent (Li-435), and a PVDF binder (KF9700, AD-c01) were mixed in a weight ratio of 96.5:1.5:2.0 in N-methylpyrrolidone to prepare a positive electrode slurry.

A process was started with discharge of the process film from the unwinding unit, optimum conditions were extracted while changing temperature and tension, and an electrode was prepared by using conditions which were extracted from when the electrode current collector was discharged.

### Comparative Example 1

An unwinding unit and a positive electrode slurry were prepared in the same manner as in Example 1 except that the above process film was not used and only the electrode current collector was wound around the feeding roller to form the unwinding unit, and an electrode was prepared by changing conditions twice during the preparation while discharging the electrode current collector from the beginning.

### Experimental Example: Electrode Defect Rate and Processability Evaluation

An electrode defect rate was measured for Example 1 and Comparative Example 1.

**[Table 1]**

| | Initial conditions | | Changed conditions | | Electrode defect rate |
|---|---|---|---|---|---|
| | Temperatu re (°C) | Tension (N) | Temperatu re (°C) | Tension (N) | |
| Example 1 | 110~140 | 40 | 100~130 | 20 | Less than 5% |
| Comparative Example 1 | 110~140 | 40 | 110~140 | 40 | 100% |

As illustrated in Table 1, in a case in which the electrode preparation apparatus according to the embodiment of the present invention was used, since conditions of the roll-to-roll process may be changed through the process film, it may have an advantage of significantly reducing the defect rate during the preparation of the electrode.

### [Description of the Symbols]

100, 200, 300: Electrode Preparation Apparatuses
110, 210, 310: Unwinding Units 111: Feeding Roller
112: Electrode Current Collector 1121: Polymer Resin Layer
1122, 1123: Metal Layers 113: Process Film
120, 220, 320: Active Material Forming Units 130, 230, 330: Winding Units
140, 240, 340: Rolling Rollers 160: Electrode
151, 152, 153, 251, 252, 253, 351, 352, 353, 354, 355: Guide Rollers

## Claims

1. An electrode preparation apparatus comprising a roll-to-roll process,
wherein the electrode preparation apparatus comprises an unwinding unit in which an electrode current collector and a process film are sequentially wound around an outer circumferential surface of a feeding roller, the unwinding unit configured to continuously supply the electrode current collector; and an active material forming unit configured to form an active material layer on a surface of the electrode current collector,
wherein the electrode current collector comprises a polymer resin layer and metal layers disposed on both sides of the polymer resin layer, and
the process film is formed of a material identical to the polymer resin layer of the electrode current collector.

2. The electrode preparation apparatus of claim 1, wherein a length ratio of the electrode current collector to the process film is in a range of 1.5:1 to 3.5:1.

3. The electrode preparation apparatus of claim 1, wherein the process film is longer than a total line length of the roll-to-roll process.

4. The electrode preparation apparatus of claim 1, wherein the polymer resin layer comprises at least one selected from the group consisting of a polyester-based resin, an epoxy-based resin, a phenol-based resin, a melamine-based resin, a urethane-based resin, a silicone-based resin, a vinyl acetate-based resin, a rubber-based resin, an acrylic-based resin, and a polyetherurethane-based resin.

5. The electrode preparation apparatus of claim 1, wherein the metal layers comprise at least one selected from the group consisting of copper, stainless steel, aluminum, nickel, titanium, heat-treated carbon, and an aluminum-cadmium alloy.

6. The electrode preparation apparatus of claim 1, wherein the process film has a surface coated with low-grade alcohol, or
has a surface treated with room-temperature plasma.

7. The electrode preparation apparatus of claim 1, further comprising a winding unit configured to wind the electrode current collector, on which the active material layer is disposed, in a form of a roll.

8. The electrode preparation apparatus of claim 1, wherein the active material forming unit comprises an active material applying unit that applies an active material slurry onto the surface of the electrode current collector; and a drying unit that dries an active material applied onto the electrode current collector.

9. The electrode preparation apparatus of claim 1, wherein the active material forming unit comprises a powderization unit that prepares powder containing an active material; and a calendaring unit that rolls the powder to prepare a free-standing film.

10. The electrode preparation apparatus of claim 1, wherein the metal layers disposed on the both sides of the polymer resin layer each independently have a thickness ratio with respect to the polymer resin layer of 1:1 to 1:15.

11. The electrode preparation apparatus of claim 1, wherein the polymer resin layer and the process film each have a thickness of 3 µm to 20 µm.

12. The electrode preparation apparatus of claim 1, wherein the metal layers disposed on the both sides of the polymer resin layer each independently have a thickness of 0.2 µm to 5 um.

13. A method of preparing an electrode which comprises a roll-to-roll process, the method comprising:
a step S1 of guiding a process film prior to an electrode current collector from an unwinding unit in which the electrode current collector and the process film are sequentially wound on an outer circumferential surface of a roller;
a step S2 of collecting a degree of deformation of the process film as data by using process conditions including temperature as variables during the guiding of the process film;
a step S3 of extracting process conditions, under which the process film is not deformed, from the collected data; and
a step S4 of disposing an active material layer on the electrode current collector while a film of the electrode current collector is guided under the process conditions extracted in the step S3.

14. The method of claim 1, wherein, in the step S1, the process film is guided to be longer than a total line length of the roll-to-roll process.
